# EUROPEAN PATENT APPLICATION

(11) **EP 4 764 624 A1**
(43) Date of publication of application: **24.06.2026**
(21) Application number: 24877128.9
(22) Date of filing: 04.10.2024
(51) Int. Cl.: G02B 5/02, B32B 7/023, G02B 1/16, G02F 1/1335, G02F 1/13357

(54) **OPTICAL SHEET, BACKLIGHT UNIT, LIQUID CRYSTAL DISPLAY APPARATUS, AND INFORMATION DEVICE**

(30) Priority: 10.10.2023 JP 2023175518; 03.10.2024 JP 2024174430
(71) Applicant: KEIWA Incorporated, Tokyo 103-0025 (JP)
(72) Inventor: TANI Satoru, Tokyo 103-0025 (JP); FUKUDA Tadayoshi, Tokyo 103-0025 (JP); SUZUKI Taihei, Tokyo 103-0025 (JP); KITAMURA Masahiro, Tokyo 103-0025 (JP)
(74) Representative: Becker Kurig & Partner Patentanwälte mbB
(86) International application number: PCT/JP2024/035672
(87) International publication number: WO 2025/079532

(57) **Abstract**

An optical sheet 5 includes a base material layer 11 and a coating layer 12 provided on a first surface of the base material layer 11. In a case where the coating layer 12 contains an antistatic agent, when the optical sheet 5 is placed in an environment of 65°C and 95%RH for 48 hours, an area percentage of a contaminated region on a surface of the coating layer 12 is less than 20%. In a case where a first intermediate layer 21 containing an antistatic agent is provided between the base material layer 11 and the coating layer 12, a content of the antistatic agent in the coating layer 12 is lower than a content of the antistatic agent in the first intermediate layer 21.

## Description

### Technical Field

The present disclosure relates to an optical sheet, a backlight unit, a liquid crystal display device, and an information apparatus.

### Background Art

In recent years, liquid crystal display devices (hereinafter also referred to as LCDs (liquid crystal displays)) have been widely used as display devices of various information apparatuses including smartphones and tablet terminals. As backlight units (hereinafter also referred to as BLUs) of LCDs, direct-type systems in which a light source is disposed on a rear surface of a liquid crystal panel or edge light systems in which a light source is disposed in a vicinity of a side surface of a liquid crystal panel are predominantly used.

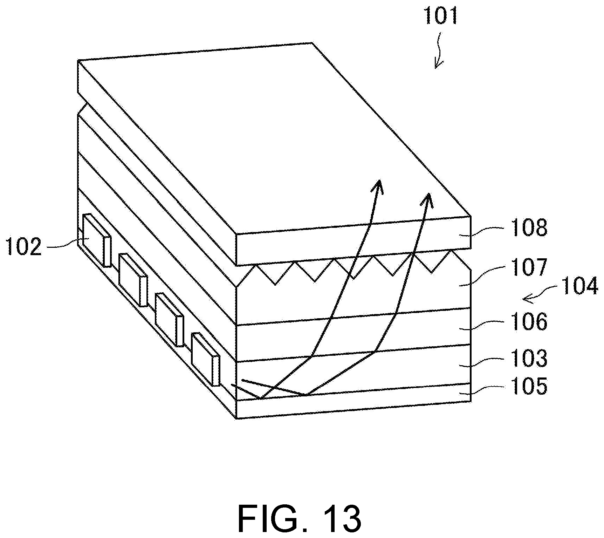

A conventional edge light-type BLU 101 shown in Fig. 13 (refer to PTL 1) includes a light source 102, a rectangular light guide plate 103 disposed so that an end portion is along the light source 102, a plurality of optical sheets 104 arranged to be stacked on the front surface side of the light guide plate 103, and a reflective sheet 105 arranged on the rear surface side of the light guide plate 103. The plurality of optical sheets 104 are a lower light diffusion sheet 106, a prism sheet 107, and an upper light diffusion sheet 108. The lower light diffusion sheet 106 is superposed on the front surface side of the light guide plate 103 and has mainly a light diffusing function. The prism sheet 107 is superposed on the front surface side of the lower light diffusion sheet 106, and the upper light diffusion sheet 108 having a function of refracting toward the normal direction side is superposed on the front surface side of the prism sheet 107 and slightly diffuses light rays, thereby suppressing uneven brightness caused by the shape or the like of prism portions of the prism sheet 107.

As the light diffusion sheets, light diffusion sheets having a base material layer and a coating layer that is laminated on the front surface side of the base material layer and has a resin matrix and resin beads are used. An antistatic agent is added to the coating layer of the light diffusion sheet in order to prevent adhesion of dust in an assembling step.

### Citation List

### Patent Literature

PTL 1: Japanese Patent Application Publication No. 2005-77448

### Summary of Invention

### Technical Problem

Since the antistatic performance of a light diffusion sheet is developed by an antistatic agent bled out over time, there is a problem in that a sheet surface becomes dirty due to the generation of foreign matter, such as lumps or crystals, derived from the antistatic agent depending on the type, amount, or the like of the antistatic agent added.

An object of the present disclosure is to provide an optical sheet capable of suppressing dirt on the surface due to an antistatic agent.

### Solution to Problem

In order to achieve the object described above, the inventors of the present application have earnestly studied and found out that even when an optical sheet is placed in an environment of 65°C and 95%RH for 48 hours, the area percentage of a contaminated region on the surface of a coating layer can be suppressed to less than 20% by selecting the type of an antistatic agent, adjusting the amount of the antistatic agent added, selecting a resin material of the coating layer, controlling crosslinking, or the like. The inventors of the present application found that when an intermediate layer containing an antistatic agent is provided between the coating layer and a base material layer, and the content of the antistatic agent in the coating layer is made to be lower than that of the intermediate layer in the configuration, it is possible to suppress dirt on a sheet surface due to the antistatic agent while imparting antistatic performance to the optical sheet. It should be noted that the configuration in which the content of the antistatic agent in the coating layer is made to be lower than that of the intermediate layer includes a configuration in which the coating layer is substantially free of an antistatic agent.

An optical sheet according to the present disclosure has been made based on the finding described above, and specifically, a first optical sheet according to the present disclosure is an optical sheet including: a base material layer; and a coating layer provided to a first surface of the base material layer, in which the coating layer contains an antistatic agent, and an area percentage of a contaminated region on a surface of the coating layer is less than 20% when the optical sheet is placed in an environment of 65°C and 95%RH for 48 hours. In addition, a second optical sheet according to the present disclosure is an optical sheet including: a base material layer; and a coating layer provided on a first surface of the base material layer, in which a first intermediate layer containing an antistatic agent is provided between the base material layer and the coating layer, and a content of an antistatic agent in the coating layer is lower than a content of the antistatic agent in the first intermediate layer.

According to the first optical sheet according to the present disclosure, it is possible to suppress dirt on a sheet surface due to the antistatic agent with a simple configuration. In the first optical sheet according to the present disclosure, when the antistatic agent is an ionic liquid or a reactive emulsifier, it is possible to reduce an amount of foreign matter, such as lumps or crystals, derived from the antistatic agent generated. In the first optical sheet according to the present disclosure, an intermediate layer substantially free of an antistatic agent may be provided between the base material layer and the coating layer.

According to the second optical sheet according to the present disclosure, it is possible to suppress dirt on the sheet surface due to the antistatic agent without narrowing the options such as the types of antistatic agents that can be used. In the second optical sheet according to the present disclosure, the coating layer may be substantially free of an antistatic agent. In addition, the first intermediate layer may also be an adhesive layer that makes the base material layer and the coating layer adhere to each other. In this case, a second intermediate layer containing an antistatic agent may be provided between the first intermediate layer and the coating layer. Alternatively, in the second optical sheet according to the present disclosure, an adhesive layer substantially free of an antistatic agent may be provided between the base material layer and the first intermediate layer. In the second optical sheet according to the present disclosure, when the half-life of a static charge voltage according to a method A of JIS L 1094 is 30 seconds or shorter, sufficient antistatic performance can be obtained. In the second optical sheet according to the present disclosure, when the amount of the contact angle decreased on the surface of the coating layer is 10 degrees or less at the time of placing the optical sheet in an environment of 65°C and 95%RH for 48 hours, it is possible to suppress foreign matter, such as lumps or crystals, derived from the antistatic agent being precipitated on the surface of the coating layer. In the second optical sheet according to the present disclosure, a sticking prevention layer provided on a second surface of the base material layer may be further provided, the sticking prevention layer may be substantially free of an antistatic agent, and a second intermediate layer containing an antistatic agent may be provided between the base material layer and the sticking prevention layer. Alternatively, in the second optical sheet according to the present disclosure, a sticking prevention layer provided on a second surface of the base material layer may be further provided, the sticking prevention layer may contain an antistatic agent, a second intermediate layer containing an antistatic agent may be provided between the base material layer and the sticking prevention layer, and a content of the antistatic agent in the sticking prevention layer may be lower than a content of the antistatic agent in the second intermediate layer. It should be noted that when the second optical sheet according to the present disclosure is placed in an environment of 65°C and 95%RH for 48 hours, an area percentage of a contaminated region on the surface of the coating layer may be less than 20%.

A backlight unit according to the present disclosure includes a light source and the first or second optical sheet according to the present disclosure described above. According to the backlight unit according to the present disclosure, since the first or second optical sheet according to the present disclosure is provided, it is possible to suppress dirt on the optical sheet surface due to the antistatic agent, and it is thus possible to suppress a decrease in brightness. In the backlight unit according to the present disclosure, the first or second optical sheet according to the present disclosure may be, for example, a light diffusion sheet.

A liquid crystal display device according to the present disclosure includes the backlight unit according to the present disclosure described above, and a liquid crystal display panel. According to the liquid crystal display device according to the present disclosure, since the backlight unit according to the present disclosure described above is provided, it is possible to suppress a decrease in brightness on a display screen.

An information apparatus according to the present disclosure includes the liquid crystal display device according to the present disclosure described above. According to the information apparatus according to the present disclosure, since the liquid crystal display device according to the present disclosure described above is provided, it is possible to suppress a decrease in brightness on the display screen. Advantageous Effects of Invention

According to the present disclosure, it is possible to provide an optical sheet capable of suppressing dirt on the surface due to an antistatic agent.

### Brief Description of Drawings

[Fig. 1]

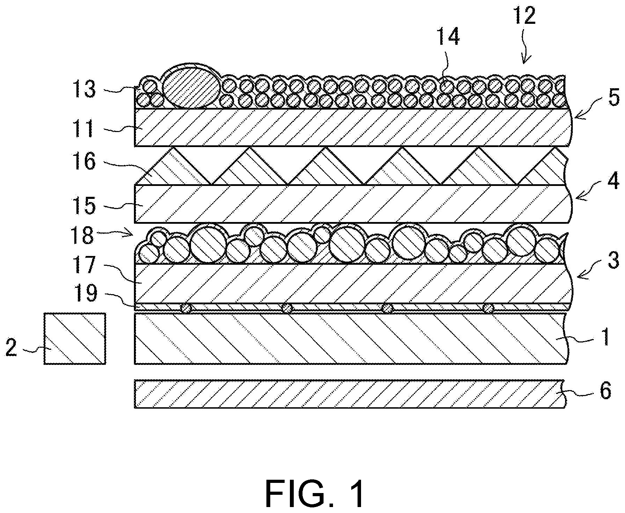

   Fig. 1 is a schematic cross-sectional view showing a backlight unit according to an embodiment.
[Fig. 2]

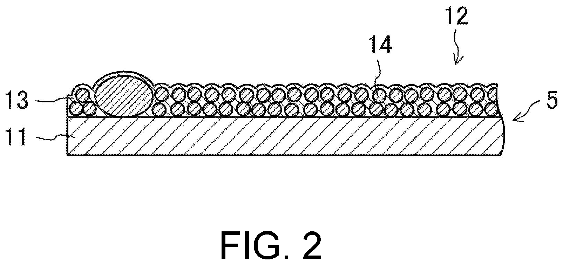

   Fig. 2 is a schematic cross-sectional view showing a light diffusion sheet according to the embodiment.
[Fig. 3]

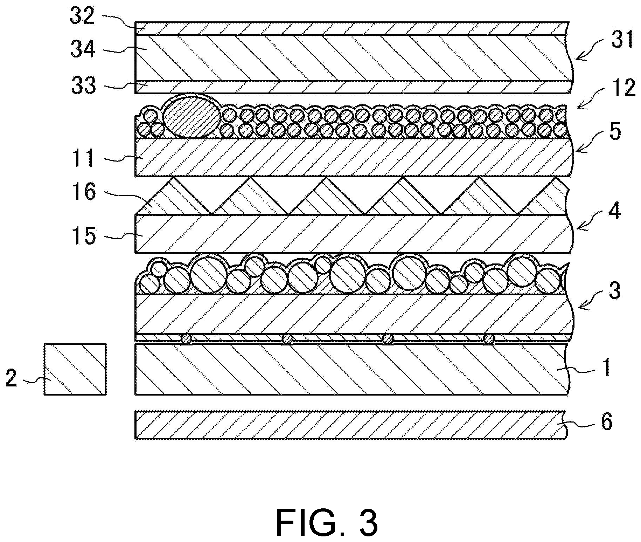

   Fig. 3 is a schematic cross-sectional view showing a liquid crystal display device according to the embodiment.
[Fig. 4]

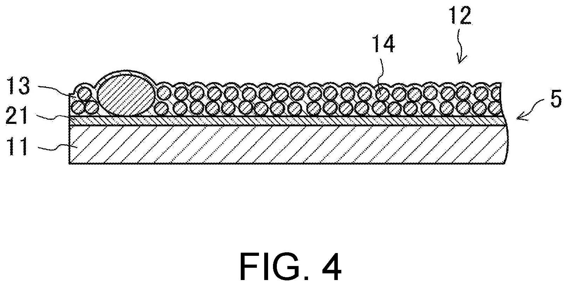

   Fig. 4 is a schematic cross-sectional view showing a light diffusion sheet according to modification example 1.
[Fig. 5]

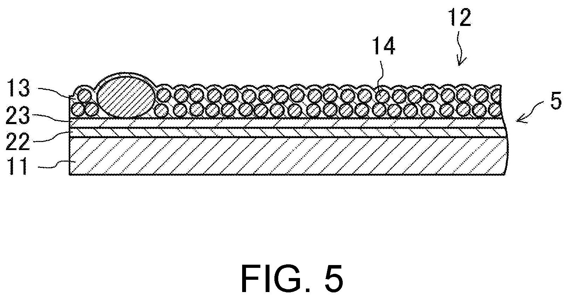

   Fig. 5 is a schematic cross-sectional view showing a light diffusion sheet according to modification example 2.
[Fig. 6]

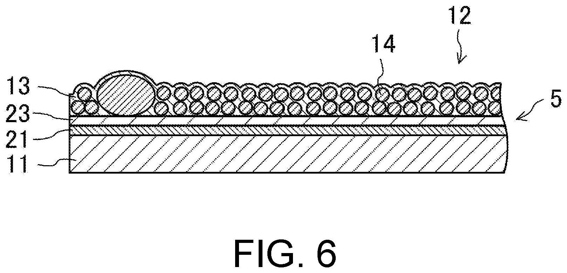

   Fig. 6 is a schematic cross-sectional view showing a light diffusion sheet according to modification example 3.
[Fig. 7]

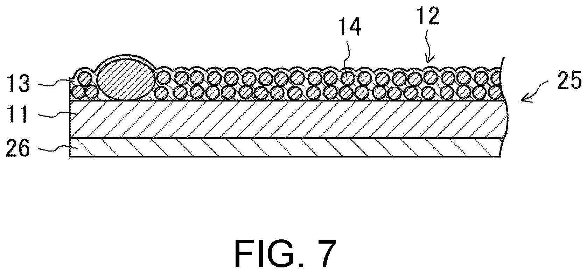

   Fig. 7 is a schematic cross-sectional view showing a light diffusion sheet according to modification example 4.
[Fig. 8]

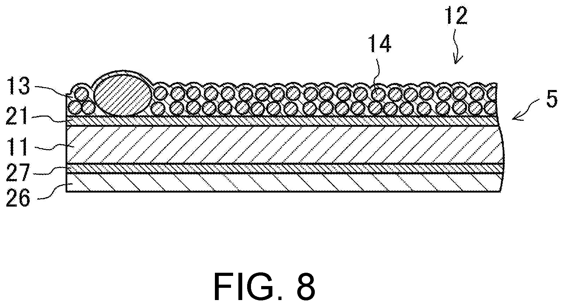

   Fig. 8 is a schematic cross-sectional view showing a light diffusion sheet according to modification example 5.
[Fig. 9]

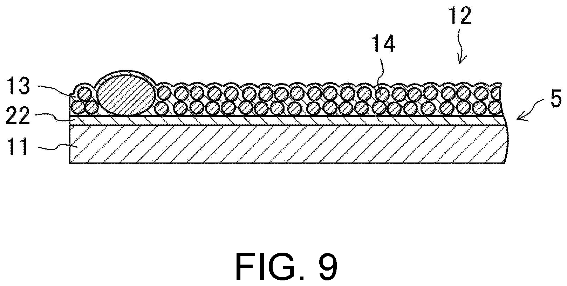

   Fig. 9 is a schematic cross-sectional view showing a light diffusion sheet according to modification example 6.
[Fig. 10]

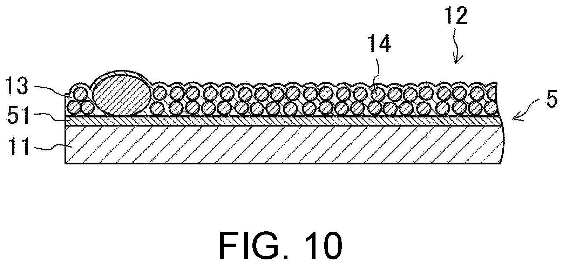

   Fig. 10 is a schematic cross-sectional view showing a light diffusion sheet according to modification example 7.
[Fig. 11]

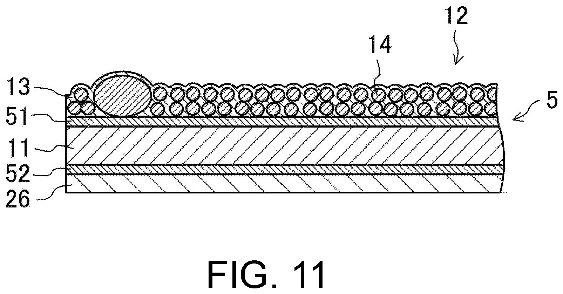

   Fig. 11 is a schematic cross-sectional view showing a light diffusion sheet according to modification example 8.
[Fig. 12]

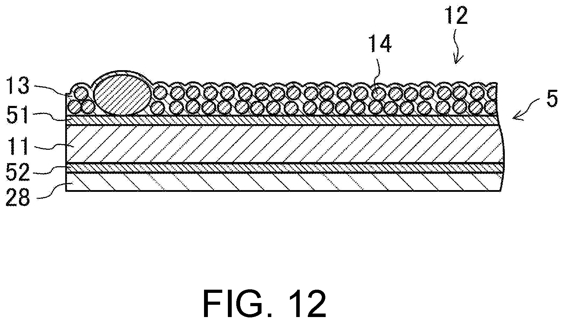

   Fig. 12 is a schematic cross-sectional view showing a light diffusion sheet according to modification example 9.
[Fig. 13]
   Fig. 13 is a schematic perspective view showing a conventional edge light-type backlight unit.

### Description of Embodiments

### (Embodiment)

Hereinafter, an optical sheet, a backlight unit, a liquid crystal display device, and an information apparatus according to an embodiment of the present disclosure will be described with reference to the drawings. It should be noted that the scope of the present disclosure is not limited to the embodiment described below, and any modifications can be made without departing from the scope of the technical concept of the present disclosure. In addition, in the present disclosure, the term "front surface side" means the viewer side in the liquid crystal display device, and the term "rear surface side" means the opposite side.

### <Backlight Unit>

Fig. 1 is a schematic cross-sectional view showing a backlight unit according to the present embodiment, and Fig. 2 is a schematic cross-sectional view showing an upper light diffusion sheet according to the present embodiment.

The backlight unit shown in Fig. 1 is an edge light-type backlight unit and includes a light guide sheet 1 that guides a light ray incident from an end surface to a front surface side, a light source 2 that emits a light ray toward the end surface of the light guide sheet 1, a lower light diffusion sheet 3 that is superposed on the front surface side of the light guide sheet 1, a prism sheet 4 that is arranged on the front surface side of the lower light diffusion sheet 3, an upper light diffusion sheet 5 that is superposed on the front surface side of the prism sheet 4, and a reflective sheet 6 that is arranged on the rear surface side of the light guide sheet 1.

The lower light diffusion sheet 3 converges the light ray that is incident from the rear surface side toward the normal direction side while diffusing the light ray (that is, converges and diffuses the light ray). The prism sheet 4 refracts the light ray that is incident from the rear surface side toward the normal direction side. The upper light diffusion sheet 5 slightly diffuses the light ray that is incident from the rear surface side to suppress uneven brightness caused by the shape or the like of prism portions of the prism sheet 4. The reflective sheet 6 reflects the light ray that is emitted from the rear surface side of the light guide sheet 1 toward the front surface side and makes the light ray incident again on the light guide sheet 1.

### <Upper Light Diffusion Sheet>

As shown in Fig. 1 and Fig. 2, the upper light diffusion sheet 5 is arranged on the front surface side of the prism sheet 4, and in the present embodiment, in particular, the upper light diffusion sheet is superposed on the front surface of the prism sheet 4 directly (with no other sheet or the like interposed therebetween). The upper light diffusion sheet 5 includes a base material layer 11 and a coating layer 12 that is laminated on the front surface side of the base material layer 11. The coating layer 12 is a light diffusion layer. The upper light diffusion sheet 5 is configured as a two-layer structure of the base material layer 11 and the coating layer 12.

The base material layer 11 is required to transmit light rays and is therefore formed using a transparent (for example, colorless transparent) synthetic resin as a main component. The main component of the base material layer 11 is not particularly limited, and for example, polyethylene terephthalate, polyethylene naphthalate, acrylic resins, polycarbonate, polystyrene, polyolefin, cellulose acetate, weather-resistant vinyl chloride, or the like may be used as the main component of the base material layer 11. It should be noted that the term "main component" refers to a component having the highest content, for example, a component the content of which is 50 mass% or more.

The lower limit of the average thickness of the base material layer 11 is preferably around 10 µm, more preferably around 35 µm, and even more preferably around 50 µm. On the other hand, the upper limit of the average thickness of the base material layer 11 is preferably around 500 µm, more preferably around 250 µm, and even more preferably around 188 µm. When the average thickness of the base material layer 11 is less than the lower limit, there is a risk that curling occurs in a case where the coating layer 12 is formed by coating. Conversely, when the average thickness of the base material layer 11 exceeds the upper limit, there is a risk that the brightness of a liquid crystal display device may decrease, and there is another risk that a demand for thinning liquid crystal display devices cannot be satisfied. It should be noted that term "average thickness" refers to an average value of the thickness at any 10 points.

The coating layer 12 configures the outermost surface of the upper light diffusion sheet 5. The coating layer 12 has a resin matrix 13 and resin beads 14 that are dispersed in the resin matrix 13. The coating layer 12 contains the resin beads 14 in a state of being dispersed at a substantially equal density. The resin beads 14 are surrounded by the resin matrix 13. When the resin beads 14 are dispersed in the resin matrix 13, fine unevenness is formed on the surface of the coating layer 12, and the coating layer 12 diffuses light rays outside with the unevenness. It should be noted that the resin beads 14 may be inorganic particles. As the inorganic particles, for example, inorganic beads of silica, aluminum hydroxide, aluminum oxide, zinc oxide, barium sulfide, magnesium silicate, a mixture thereof, or the like can be used.

The lower limit of the average thickness of the coating layer 12 is, for example, around 1 µm and more preferably around 2 µm. On the other hand, the upper limit of the average thickness of the coating layer 12 is, for example, around 20 µm and more preferably around 15 µm. When the average thickness of the coating layer 12 is less than the lower limit, it is not possible to securely fix the resin beads 14 with the resin matrix 13, and there is a risk that the resin beads 14 may fall out of the coating layer 12. Conversely, when the average thickness of the coating layer 12 exceeds the upper limit, it becomes difficult to form fine and high-density unevenness on the surface of the coating layer 12, and as a result, there is a risk that it may not be possible to sufficiently suppress the generation of glare due to interference with a cell array of a liquid crystal panel that is arranged on the front surface side of the upper light diffusion sheet 5.

The resin matrix 13 is required to transmit light rays and is therefore formed using a transparent (particularly colorless and transparent) synthetic resin as a main component. As the synthetic resin, for example, a thermosetting resin, an active energy ray-curable resin, or the like can be used. As the thermosetting resin, for example, an epoxy resin, a silicone resin, a phenolic resin, a urea resin, an unsaturated polyester resin, a melamine resin, an alkyd resin, a polyimide resin, an acrylic resin, an amide functional copolymer, a urethane resin, and the like can be used. As the active energy ray-curable resin, an ultraviolet ray-curable resin that is crosslinked and cured by irradiation with ultraviolet rays, an electron beamcurable resin that is crosslinked and cured by irradiation with an electron beam, and the like can be used, and a resin that is appropriately selected from a polymerizable monomer and a polymerizable oligomer can be used. In order to improve adhesion to the base material layer 11 and prevent the resin beads 14 from falling out of the coating layer 12, for example, an acrylic, urethane-based, or acrylic urethane-based ultraviolet curable resin may also be used as the active energy ray-curable resin.

In the present embodiment, an antistatic agent is added to the resin matrix 13. That is, the coating layer 12 contains an antistatic agent. The type of the antistatic agent is not particularly limited as long as the antistatic agent is free of PFAS (organic fluorine compound), and for example, various antistatic agents such as electron conduction-type, ion conduction-type, and conjugated electron-type antistatic agents may be used. Examples of the electron conduction-type antistatic agent include metals and metal oxides such as indium tin oxide (ITO), aluminum-added zinc oxide (ZZAO), and antimony tin oxide. Examples of the ion conduction-type antistatic agent include non-ionic antistatic agents (glycerin fatty acid esters, polyoxyethylene alkyl ether salts, polyoxyethylene alkyl amines, alkyldiethanolamide, and the like), anionic antistatic agents (alkylsulfonates, alkylbenzene sulfonates, alkylphosphates, and the like), cationic antistatic agents (tetraalkylammonium salts, trialkylbenzylammonium salts, and the like), and amphoteric antistatic agents (alkylpentyne, alkylimidazolium pentayne, and the like). Examples of the conjugated electron-type antistatic agent include polythiophene, polyacetylene, polypyrrole, polyaniline, and the like.

In the present embodiment, even when the upper light diffusion sheet 5 is placed in an environment of 65°C and 95%RH for 48 hours, the area percentage of a contaminated region on the surface of the coating layer 12 can be suppressed to less than 20% by adjusting the amount of the antistatic agent added, selecting the material of the resin matrix 13, controlling crosslinking, or the like depending on the type of the selected antistatic agent. Therefore, a macromolecular ion conduction-type antistatic agent may also be used. Examples of the macromolecular ion conduction-type antistatic agent include polyether-type antistatic agents (polyethylene oxide, polyetherimide-imide, and the like), quaternary ammonium salttype antistatic agents (a methacryl imide copolymer, a maleimide copolymer, and the like), and sulfonic acid-type antistatic agents (polystyrene sulfonate, and the like), betaine-type antistatic agents (a carbobetaine graft copolymer and the like), a polymer electrolytic copper composite, and the like.

Alternatively, when a reactive emulsifier such as AS series manufactured by ADEKA Corporation, ELEXCEL (registered trademark) IL, AS series, or the like manufactured by DKS CO. Ltd. or ADEKA REASOAP SR, SE, ER, NE series, or the like manufactured by ADEKA Corporation is used as the antistatic agent; it is possible to particularly reduce the amount of foreign matter such as lumps or crystals derived from the antistatic agent generated.

The resin matrix 13 may also contain other additives other than the antistatic agent. As the additives, for example, silicone-based additives, fluorine-based additives, and the like can be used. The content of the additives in terms of solid content in the resin matrix 13 with respect to 100 parts by mass of the synthetic resin component may be, for example, 0.05 parts by mass or more and 5 parts by mass or less.

The resin beads 14 are resin particles that transmit and diffuse light rays. The resin bead 14 is formed of a transparent, particularly, colorless and transparent, synthetic resin as a main component. As the main component of the resin bead 14, for example, an acrylic resin, an acrylonitrile resin, polyurethane, polyvinyl chloride, polystyrene, polyamide, polyacrylonitrile, and the like can be used. The shape of the resin bead 14 is not particularly limited and may be, for example, a spherical shape, a cubic shape, a needle shape, a rod shape, a spindle shape, a plate shape, a scale shape, a fiber shape, or the like and is, in particular, preferably a spherical shape having excellent light diffusivity.

The particle diameter of the resin bead 14 is preferably as small as possible provided that the particle diameter is equal to or greater than the wavelength of a light ray that is emitted by the light source 2 (hereinafter also referred to as the wavelength of the light source), and the upper limit of the average particle diameter of the resin beads 14 may be, for example, around 2 µm and more preferably around 1 µm. When the average particle diameter of the resin beads 14 is less than the wavelength of the light source, unevenness on the surface of the coating layer 12 becomes too small, which leads to insufficient light diffusivity, and there is a risk that it may not be possible to sufficiently suppress uneven brightness caused by the shape or the like of the prism portions of the prism sheet 4. Conversely, when the average particle diameter of the resin beads 14 exceeds the upper limit, a lot of relatively large unevenness is formed on the surface of the coating layer 12, and there is a risk that it may not be possible to sufficiently suppress the generation of glare due to interference with the cell array of the liquid crystal panel.

The lower limit of the refractive index of the resin bead 14 is, for example, preferably 1.46 and more preferably 1.48. On the other hand, the upper limit of the refractive index of the resin bead 14 is preferably 1.60 and more preferably 1.59. When the refractive index of the resin bead 14 is made to be within the range described above, the refractive index difference from the resin matrix 13 can be adjusted as appropriate (for example, to 0.05 or less), which makes it easy to suppress uneven brightness caused by the shape or the like of the projecting prism portions of the prism sheet 4. It should be noted that the "refractive index" refers to a refractive index of light having a wavelength of 589.3 nm (the D-line of sodium).

The lower limit of the arithmetic average roughness Ra of the surface of the coating layer 12 (that is, the surface of the upper light diffusion sheet 5) may be, for example, around 0.1 µm and more preferably around 0.2 µm. On the other hand, the upper limit of the arithmetic average roughness Ra of the surface of the coating layer 12 may be, for example, around 1.5 µm and more preferably around 1.0 µm. When the arithmetic average roughness Ra of the surface of the coating layer 12 is less than the lower limit, the unevenness on the surface of the coating layer 12 becomes too small, the light diffusivity becomes insufficient, and there is a risk that it may not be possible to sufficiently suppress uneven brightness caused by the shape or the like of the projecting prism portions of the prism sheet 4. Conversely, when the arithmetic average roughness Ra of the surface of the coating layer 12 exceeds the upper limit, a lot of relatively large unevenness is formed on the surface of the coating layer 12, and there is a risk that it may not be possible to sufficiently suppress the generation of glare due to interference with the cell array of the liquid crystal panel. It should be noted that the "arithmetic average roughness Ra" refers to a value measured according to JIS B0601-1994.

The lower limit of the content of the resin matrix 13 in the coating layer 12 may be, for example, around 10 mass% and more preferably around 20 mass%. On the other hand, the upper limit of the content of the resin matrix 13 in the coating layer 12 may be, for example, around 80 mass% and more preferably around 75 mass%. When the content of the resin matrix 13 is less than the lower limit, the light diffusivity of the coating layer 12 becomes too high, and there is a risk that the brightness of a liquid crystal display device may not be sufficiently increased. Conversely, when the content of the resin matrix 13 exceeds the upper limit, the number of the resin beads 14 in the coating layer 12 is insufficient, which makes it difficult to form fine and high-density unevenness on the surface of the coating layer 12, and there is a risk that it may not be possible to sufficiently suppress the generation of glare due to interference with a cell array of a liquid crystal panel that is arranged on the front surface side of the upper light diffusion sheet 5.

The lower limit of the content of the resin beads 14 in the coating layer 12 may be, for example, around 20 mass% and more preferably around 25 mass%. On the other hand, the upper limit of the content of the resin beads 14 in the coating layer 12 may be, for example, around 90 mass% and more preferably around 80 mass%. When the content of the resin beads 14 in the coating layer 12 is less than the lower limit, it becomes difficult to form fine and high-density unevenness on the surface of the coating layer 12, and there is a risk that it may not be possible to sufficiently suppress the generation of glare due to interference with a cell array of a liquid crystal panel that is arranged on the front surface side of the upper light diffusion sheet 5. Conversely, when the content of the resin beads 14 in the coating layer 12 exceeds the upper limit, the light diffusivity of the coating layer 12 becomes too high, and there is a risk that the brightness of a liquid crystal display device may not be sufficiently increased.

The lower limit of the haze value of the upper light diffusion sheet 5 may be, for example, around 10%, more preferably around 30%, and still more preferably around 40%. On the other hand, the upper limit of the haze value of the upper light diffusion sheet 5 may be around 90%, and more preferably around 70%. When the haze value of the upper light diffusion sheet 5 is less than the lower limit, there is a risk that it may not be possible to sufficiently suppress uneven brightness caused by the shape or the like of the projecting prism portions of the prism sheet 4. Conversely, when the haze value of the upper light diffusion sheet 5 exceeds the upper limit, there is a risk that the brightness of a liquid crystal display device may become insufficient. It should be noted that the "haze value" refers to a value measured according to JIS K 7136: 2000.

### <Method for Manufacturing Upper Light Diffusion Sheet>

A method for manufacturing the upper light diffusion sheet 5 is not particularly limited and may include, for example, a step of forming a sheet body configuring the base material layer 11 (hereinafter referred to as a base material layer forming step) and a step of laminating the coating layer 12 on one surface side of this sheet body (hereinafter referred to as a light diffusion layer laminating step).

The base material layer forming step is not particularly limited, and for example, a method in which a molten thermoplastic resin is extruded through a T-die, and the extruded body is then stretched in the layer longitudinal direction and the layer width direction to form a sheet body can be used. As a known extrusion molding method using a T-die, for example, a polishing roll method and a chill roll method can be used. In addition, as a method for stretching the sheet body, for example, a tubular film biaxial stretching method, a flat film biaxial stretching method, or the like can be used.

The light diffusion layer laminating step may include, for example, a step of preparing a coating solution containing the resin matrix 13 and the resin beads 14 (hereinafter referred to as a preparation step), a step of applying the coating solution prepared in the preparation step to one surface side of the sheet body (hereinafter referred to as a coating step), and a step of drying and curing the coating solution applied in the coating step (hereinafter referred to as a curing step). In the preparation step, a coating solution containing an active energy ray-curable resin as a main component of the resin matrix 13 and containing the resin beads 14 may be prepared. In the method for manufacturing the upper light diffusion sheet, when an active energy ray-curable resin is used as the main component of the resin matrix 13, it becomes easy to relatively rapidly cure the active energy ray-curable resin by, for example, irradiation with ultraviolet rays in the curing step after the coating solution is applied in the coating step. In addition, in the preparation step of the method for manufacturing the upper light diffusion sheet, a coating solution containing many resin beads having small particle diameters and slightly containing resin beads having large particle diameters is prepared as the resin beads 14, whereby it is possible to prevent sticking to the liquid crystal panel with the resin beads having large particle diameters while suppressing the generation of glare due to interference with the cell array of the liquid crystal panel with the resin beads with small particle diameters.

It should be noted that the method for manufacturing the upper light diffusion sheet 5 may further include, prior to the light diffusion layer laminating step, a surface treatment step of performing a corona discharge treatment, an ozone treatment, a low-temperature plasma treatment, a glow discharge treatment, an oxidation treatment, a primer coat treatment, an undercoat treatment, an anchor coat treatment, or the like on a surface of the sheet body on a side on which the light diffusion layer is laminated.

### <Prism Sheet>

The prism sheet 4 is required to transmit light rays, and is therefore formed of a transparent (for example, colorless transparent) synthetic resin as a main component. The prism sheet 4 has a base material layer 15 and protrusion rows made of a plurality of projecting prism portions 16 that are laminated on the surface of the base material layer 15. The projecting prism portions 16 are laminated in stripes on the surface of the base material layer 15. The projecting prism portion 16 is a triangular prism-like body having a rear surface in contact with the surface of the base material layer 15.

The lower limit of the thickness of the prism sheet 4 (the height from the rear surface of the base material layer 15 to the top of the projecting prism portion 16) may be, for example, around 50 µm and more preferably around 100 µm. On the other hand, the upper limit of the thickness of the prism sheet 4 may be around 200 µm and more preferably around 180 µm. The lower limit of a pitch p of the projecting prism portions 16 in the prism sheet 4 (see Fig. 2) may be, for example, around 20 µm and more preferably around 30 µm. On the other hand, the upper limit of the pitch p of the projecting prism portions 16 in the prism sheet 4 may be, for example, around 100 µm and more preferably around 60 µm. The apex angle of the projecting prism portion 16 may be, for example, 85° or more and 95° or less. The lower limit of the refractive index of the projecting prism portion 16 may be, for example, 1.5 and or more preferably 1.55. On the other hand, the upper limit of the refractive index of the projecting prism portion 16 may be, for example, 1.7.

It should be noted that the backlight unit of the present embodiment shown in Fig. 1 is not only limited to a backlight unit having only one prism sheet 4 and may further have another prism sheet that is superposed on the prism sheet 4. In this case, it is preferable that the ridgelines of the plurality of projecting prism portions 16 of the prism sheet 4 are orthogonal to the ridgelines of a plurality of projecting prism portions of the other prism sheet. In such a configuration, it is possible to refract a light ray that is incident from the lower light diffusion sheet 3 with the prism sheet toward the normal direction side, and furthermore, refract a light ray that is emitted from the prism sheet with the other prism sheet so as to travel substantially perpendicularly to the rear surface of the upper light diffusion sheet 5. The material and thickness of the other prism sheet, the pitch of the projecting prism portions, the apex angle of the projecting prism portion, and the refractive index of the projecting prism portion may be the same as those of the prism sheet 4.

### <Lower Light Diffusion Sheet>

The lower light diffusion sheet 3 has a base material layer 17, a coating layer 18 that is arranged on the front surface side of the base material layer 17, and a sticking prevention layer 19 that is arranged on the rear surface side of the base material layer 17. The coating layer 18 is a light diffusion layer and configures the outermost surface of the lower light diffusion sheet 3. The base material layer 17 of the lower light diffusion sheet 3 may be configured in the same manner as the base material layer 11 of the upper light diffusion sheet 5 described above. The coating layer 18 of the lower light diffusion sheet 3 contains a light diffusing agent and a binder therefor. The coating layer 18 of the lower light diffusion sheet 3 may contain the same antistatic agent as that in the coating layer 12 of the upper light diffusion sheet 5 described above.

Light diffusing agents that are used in the coating layer 18 are particles having a property of diffusing light rays and are roughly classified into inorganic fillers and organic fillers. As the inorganic fillers, for example, silica, aluminum hydroxide, aluminum oxide, zinc oxide, barium sulfide, magnesium silicate, or mixtures thereof can be used. As the organic fillers, for example, acrylic resins, acrylonitrile resins, polyurethane, polyvinyl chloride, polystyrene, polyamide, polyacrylonitrile, and the like can be used. The shape of the light diffusing agent is not particularly limited and may be, for example, a spherical shape, a cubic shape, a needle shape, a rod shape, a spindle shape, a plate shape, a scale shape, a fiber shape, or the like and is preferably a spherical shape having excellent light diffusivity.

The lower limit of the average particle diameter of the light diffusing agent that is used in the coating layer 18 may be, for example, around 1 µm and more preferably around 2 µm. On the other hand, the upper limit of the average particle diameter of the light diffusing agent may be, for example, around 50 µm, more preferably around 20 µm, and still more preferably around 15 µm. When the average particle diameter of the light diffusing agent is less than the lower limit, unevenness on the surface of the coating layer 18 becomes small, and there is a risk that light diffusivity necessary for the lower light diffusion sheet 3 may not be satisfied. Conversely, when the average particle diameter of the light diffusing agent exceeds the upper limit, the thickness of the lower light diffusion sheet 3 increases, and there is a risk that uniform diffusion may be difficult.

The lower limit of the content of the binder in the coating layer 18 may be, for example, around 15 mass% and more preferably around 30 mass%. On the other hand, the upper limit of the content of the binder in the coating layer 18 may be, for example, around 48 mass% and more preferably around 45 mass%. When the content of the binder is less than the lower limit, there is a risk that the light diffusing agent may not be securely fixed with the binder. Conversely, when the content of the binder exceeds the upper limit, there is a risk that the light diffusivity may become insufficient.

The lower limit of the content of the light diffusing agent in the coating layer 18 may be, for example, around 52 mass% and more preferably around 55 mass%. On the other hand, the upper limit of the content of the light diffusing agent in the coating layer 18 may be, for example, around 85 mass% and more preferably around 70 mass%. When the content of the light diffusing agent is less than the lower limit, there is a risk that the light diffusivity may become insufficient. Conversely, when the content of the light diffusing agent exceeds the upper limit, there is a risk that the light diffusing agent may not be securely fixed with the binder.

The lower limit of the arithmetic average roughness Ra of the surface of the coating layer 18 may be, for example, around 0.1 µm and more preferably around 0.2 µm. On the other hand, the upper limit of the arithmetic average roughness Ra of the surface of the coating layer 18 may be, for example, around 5 µm, more preferably around 3 µm, and still more preferably around 2 µm. When the arithmetic average roughness Ra of the surface of the coating layer 18 is less than the lower limit, there is a risk that the light diffusivity may become insufficient. On the other hand, when the arithmetic average roughness Ra of the surface of the coating layer 18 exceeds the upper limit, there is a risk that the light transmittance may decrease and the brightness of a liquid crystal display device may become insufficient.

The sticking prevention layer 19 is formed of resin beads dispersed in a resin matrix. These resin beads are arranged as scattered spots on the rear surface side of the base material layer 17. Since these resin beads are arranged as scattered spots, the sticking prevention layer 19 has a plurality of convex portions that are formed due to the resin beads and flat portions free from the resin beads. The sticking prevention layer 19 abuts on the light guide sheet 1 arranged on the rear surface side in a scattered manner at the plurality of convex portions, but does not abut on the entire rear surface, thereby preventing sticking and suppressing uneven brightness of the liquid crystal display device.

The lower limit of the haze value of the lower light diffusion sheet 3 may be, for example, around 80%, more preferably around 85%, and still more preferably around 90%. When the haze value of the lower light diffusion sheet 3 is less than the lower limit, there is a risk that the light diffusivity may become insufficient. It should be noted that the upper limit of the haze value of the lower light diffusion sheet 3 may be, for example, around 95%.

### <Light Guide Sheet>

The light guide sheet 1 is a sheet-like optical member that emits a light ray emitted from the light source 2 from the surface while propagating the light ray inside. The light guide sheet 1 may be formed in a substantially wedge shape or a substantially flat plate shape in the cross section. Since the light guide sheet 1 needs to be translucent and is thus formed of a transparent (for example, colorless and transparent) resin as a main component. The main component of the light guide sheet 1 is not particularly limited, but may be a polycarbonate having excellent transparency, strength, and the like or a synthetic resin such as an acrylic resin having excellent transparency, abrasion resistance, and the like. Since the polycarbonate has excellent transparency and has a high refractive index, when the main component of the light guide sheet 1 is the polycarbonate, total reflection is likely to occur at the interface with an air layer (a layer that is formed in the gap between the light guide sheet 1 and the lower light diffusion sheet 3 and a layer that is formed in the gap between the light guide sheet 1 and the reflective sheet 6), and it is thus possible to efficiently propagate the light ray. In addition, the polycarbonate is heatresistant and is thus less likely to deteriorate or the like due to heat generated from the light source 2.

### <Light Source>

The light source 2 is arranged such that the irradiation surface faces (or abuts on) the end surface of the light guide sheet 1. As the light source 2, various light sources can be used, and for example, light-emitting diodes (LEDs) can be used. Specifically, as the light source 2, a plurality of LEDs arranged along the end surface of the light guide sheet 1 can be used.

### <Reflective Sheet>

As the reflective sheet 6, for example, a white sheet containing a filler dispersed in a base material resin such as polyester, a mirror surface sheet having specular reflectivity enhanced by depositing a metal such as aluminum or silver on the surface of a film formed of polyester, or the like can be used.

### <Liquid Crystal Display Device>

Fig. 3 is a schematic cross-sectional view showing a liquid crystal display device according to the present embodiment.

The liquid crystal display device shown in Fig. 3 has a configuration in which a liquid crystal panel 31 is arranged on the front surface side of the backlight unit shown in Fig. 1 (the front surface side of the upper light diffusion sheet 5). That is, the liquid crystal display device shown in Fig. 3 includes the light guide sheet 1 that guides a light ray incident from an end surface to a front surface side, the light source 2 that emits a light ray toward the end surface of the light guide sheet 1, the lower light diffusion sheet 3 that is superposed on the front surface side of the light guide sheet 1, the prism sheet 4 that is arranged on the front surface side of the lower light diffusion sheet 3, the upper light diffusion sheet 5 that is superposed on the front surface side of the prism sheet 4, the reflective sheet 6 that is arranged on the rear surface side of the light guide sheet 1, and the liquid crystal panel 31 that is superposed on the front surface side of the upper light diffusion sheet 5.

The liquid crystal panel 31 is arranged directly on the surface of the upper light diffusion sheet 5 (with no other sheets or the like therebetween). The liquid crystal panel 31 includes a front surface side polarizing plate 32 and a rear surface side polarizing plate 33 that are arranged substantially in parallel with each other at a predetermined interval, and a liquid crystal cell 34 that is arranged therebetween. The front surface side polarizing plate 32 and the rear surface side polarizing plate 33 are each composed of, for example, a polarizer such as an iodine-based polarizer, a dye-based polarizer, or a polyene-based polarizer and a pair of transparent protective films that are arranged on both sides thereof. The transmission axis directions of the front surface side polarizing plate 32 and the rear surface side polarizing plate 33 are orthogonal to each other.

The liquid crystal cell 34 has a function of controlling the quantity of light that is transmitted, and various types of well-known liquid crystal cells are employed. The liquid crystal cell 34 is generally a laminated structure composed of a substrate, a color filter, a counter electrode, a liquid crystal layer, a pixel electrode, a substrate, and the like. A transparent conductive film of ITO or the like is used in this pixel electrode. As the display mode of the liquid crystal cell 34, it is possible to use, for example, TN (twisted nematic), VA (virtical alignment), IPS (in-place switching), FLC (ferroelectric liquid crystal), AFLC (anti-ferroelectric liquid crystal), OCB (optically compensatory bend), STN (supper twisted nematic), HAN (hybrid aligned nematic), and the like. The pixel pitch of the liquid crystal panel 31 (the pixel pitch of the liquid crystal cell) may be, for example, around 25 µm or less.

### <Modification Example 1 of Upper Light Diffusion Sheet>

Differences of the upper light diffusion sheet 5 of the present modification example from the upper light diffusion sheet 5 of the above-described embodiment shown in Fig. 2 are that the coating layer 12 is substantially free of antistatic agents, and as shown in Fig. 4, an adhesive layer 21 containing an antistatic agent is provided between the base material layer 11 and the coating layer 12. That is, the upper light diffusion sheet 5 of the present modification example is configured as a three-layer structure of the base material layer 11, the adhesive layer 21, and the coating layer 12. The adhesive layer 21 is a first intermediate layer. The adhesive layer 21 may contain the same antistatic agent as that in the coating layer 12 of the above-described embodiment. The adhesive layer 21 may be formed by adding an antistatic agent to a primer layer or easy adhesive layer that makes the base material layer 11 and the coating layer 12 adhere to each other.

It should be noted that in the lower light diffusion sheet 3 (see Fig. 1) of the above-described embodiment, the coating layer 18 may be substantially free of antistatic agents, and an adhesive layer containing an antistatic agent may be provided between the base material layer 17 and the coating layer 18 as in the present modification example.

### <Modification Example 2 of Upper Light Diffusion Sheet>

A difference of the upper light diffusion sheet 5 of the present modification example from the upper light diffusion sheet 5 of the above-described modification example 1 shown in Fig. 4 is that the upper light diffusion sheet 5 has an adhesive layer 22 substantially free of antistatic agents and a thin layer 23 containing an antistatic agent in place of the adhesive layer 21 containing an antistatic agent as shown in Fig. 5. That is, the upper light diffusion sheet 5 of the present modification example is configured as a four-layer structure of the base material layer 11, the adhesive layer 22, the thin layer 23, and the coating layer 12. The thin layer 23 is a first intermediate layer. The thin layer 23 may contain the same antistatic agent as that in the coating layer 12 of the above-described embodiment. The thin layer 23 may be formed by adding an antistatic agent to the same resin as that in the coating layer 12 of the above-described embodiment.

It should be noted that in the lower light diffusion sheet 3 (see Fig. 1) of the above-described embodiment, the coating layer 18 may be substantially free of antistatic agents, and an adhesive layer substantially free of antistatic agents and a thin layer containing an antistatic agent may be provided between the base material layer 17 and the coating layer 18 as in the present modification example.

### <Modification Example 3 of Upper Light Diffusion Sheet>

A difference of the upper light diffusion sheet 5 of the present modification example from the upper light diffusion sheet 5 of the above-described modification example 1 shown in Fig. 4 is that the same thin layer 23 as in the modification example 2 is provided between the same adhesive layer 21 as in the modification example 1 and the coating layer 12 as shown in Fig. 6. That is, the upper light diffusion sheet 5 of the present modification example is configured as a four-layer structure of the base material layer 11, the adhesive layer 21, the thin layer 23, and the coating layer 12. The adhesive layer 21 is a first intermediate layer, and the thin layer 23 is a second intermediate layer.

It should be noted that in the lower light diffusion sheet 3 (see Fig. 1) of the above-described embodiment, the coating layer 18 may be substantially free of antistatic agents, and an adhesive layer and a thin layer each substantially free of antistatic agents may be provided between the base material layer 17 and the coating layer 18 as in the present modification example.

### <Modification Example 4 of Upper Light Diffusion Sheet>

A difference of an upper light diffusion sheet 25 of the present modification example from the upper light diffusion sheet 5 of the above-described embodiment shown in Fig. 2 is that the sticking prevention layer 26 is provided on the rear surface side of the base material layer 11 as shown in Fig. 7. The upper light diffusion sheet 25 of the present modification example shown in Fig. 7 can be applied to the backlight unit shown in Fig. 1 in place of the upper light diffusion sheet 5 of the above-described embodiment. That is, the upper light diffusion sheet 25 of the present modification example also slightly diffuses a light ray that is emitted from the rear surface side to suppress uneven brightness due to the shape or the like of the projecting prism portions 16 of the prism sheet 4 and suppresses the generation of glare due to interference with a cell array of a liquid crystal panel (not shown) that is arranged on the front surface side of the upper light diffusion sheet 25.

The upper light diffusion sheet 25 of the present modification example is provided with a base material layer 11, a coating layer 12 laminated on the front surface side of the base material layer 11, and a sticking prevention layer 26 laminated on the rear surface side of the base material layer 11. The upper light diffusion sheet 25 is configured as a three-layer structure including the base material layer 11, the coating layer 12 and the sticking prevention layer 26. The base material layer 11 and the coating layer 12 of the upper light diffusion sheet 25 may have the same configurations as those of the base material layer 11 and the coating layer 12 of the upper light diffusion sheet 5 of the above-described embodiment.

The sticking prevention layer 26 configures the outermost rear surface of the upper light diffusion sheet 25. The sticking prevention layer 26 needs to transmit light rays and is thus formed of a transparent (for example, colorless and transparent) synthetic resin as a main component. The sticking prevention layer 26 is configured e in a film shape having a flat rear surface and a substantially uniform thickness. The sticking prevention layer 26 is configured to partially abut on the top portions of the projecting prism portions 16 of the prism sheet 4 that is arranged on the rear surface side of the upper light diffusion sheet 25 and thereby prevents sticking to the prism sheet 4. As the main component of the sticking prevention layer 26, it is possible to use, for example, polycarbonate, acrylic resins, polyethylene terephthalate, polyethylene naphthalate, polystyrene, methyl (meth)acrylate-styrene copolymers, polyolefin, cycloolefin polymers, cycloolefin copolymers, cellulose acetate, weather-resistant vinyl chloride, active energy ray-curable resins, and the like. In particular, when an acrylic resin is used as the main component of the sticking prevention layer 26, the strength of the rear surface of the upper light diffusion sheet 25 is increased, and it becomes easy to prevent damage to the rear surface.

The lower limit of the average thickness of the sticking prevention layer 26 may be, for example, around 1 µm and more preferably around 2 µm. On the other hand, the upper limit of the average thickness of the sticking prevention layer 26 may be, for example, around 10 µm and more preferably around 8 µm. When the average thickness of the sticking prevention layer 26 is less than the lower limit, there is a risk that it may not be possible to reliably prevent the rear surface of the upper light diffusion sheet 25 from being damaged. Conversely, when the average thickness of the sticking prevention layer 26 exceeds the upper limit, there is a risk that the brightness of a liquid crystal display device may decrease.

The upper limit of the arithmetic average roughness Ra of the rear surface of the sticking prevention layer 26 may be, for example, around 0.04 µm, more preferably around 0.035 µm, and still more preferably around 0.03 µm. When the arithmetic average roughness Ra of the rear surface of the sticking prevention layer 26 exceeds the upper limit, there is a risk that the projecting prism portions 16 of the prism sheet 4 may be damaged due to the abutting on the sticking prevention layer 26. It should be noted that the lower limit of the arithmetic average roughness Ra of the rear surface of the sticking prevention layer 26 is not particularly limited and may be, for example, 0.01 µm.

A method for manufacturing the upper light diffusion sheet 25 may include, for example, a step of forming a sheet body configuring the base material layer 11 (hereinafter referred to as a base material layer forming step), a step of laminating the coating layer 12 on one surface side of this sheet body (hereinafter referred to as a light diffusion layer laminating step), and a step of laminating the sticking prevention layer 26 on the other surface side of the sheet body configuring the base material layer 11 (hereinafter referred to as a sticking prevention layer laminating step). As the sticking prevention layer laminating step, for example, a method in which the sticking prevention layer 26 is formed together with the sheet body configuring the base material layer 11 at the same time by a co-extrusion method, a method in which the sticking prevention layer 26 is laminated by coating the other surface side of the sheet body, and the like can be used.

It should be noted that the base material layer forming step in the method for manufacturing the upper light diffusion sheet 25 may be performed together with the sticking prevention layer laminating step by the co-extrusion method at the same time as described above or may be performed separately from the sticking prevention layer laminating step. In a case where the base material layer forming step and the sticking prevention layer forming step are performed separately, the base material layer forming step can be performed by the same method as in the base material layer forming step of the upper light diffusion sheet 5 of the above-described embodiment. In addition, the light diffusion layer laminating step in the method for manufacturing the upper light diffusion sheet 25 can also be performed by the same method as in the light diffusion layer laminating step of the upper light diffusion sheet 5 of the above-described embodiment.

In the upper light diffusion sheet 25 of the present modification example, since the sticking prevention layer 26 has been laminated on the rear surface side of the base material layer 11, it is possible to improve the sticking prevention properties with the prism sheet 4 and the damage prevention properties of the rear surface of the upper light diffusion sheet 25 while suppressing uneven brightness due to the shape or the like of the projecting prism portions 16 of the prism sheet 4.

In the upper light diffusion sheet 25 of the present modification example, the sticking prevention layer 26 may contain the same antistatic agent as in the coating layer 12 of the above-described embodiment.

It should be noted that in the lower light diffusion sheet 3 (see Fig. 1) of the above-described embodiment, the sticking prevention layer 19 may contain an antistatic agent as in the present modification example.

### <Modification Example 5 of Upper Light Diffusion Sheet>

A difference of the upper light diffusion sheet 5 of the present modification example from the upper light diffusion sheet 5 of the above-described modification example 1 shown in Fig. 4 is that the same sticking prevention layer 26 as in the modification example 4 is provided on the rear surface side of the base material layer 11 as shown in Fig. 8. However, in the present modification example, the sticking prevention layer 26 may be substantially free of antistatic agents. In addition, in the present modification example, an adhesive layer 27 containing an antistatic agent is provided between the base material layer 11 and the sticking prevention layer 26. That is, the upper light diffusion sheet 5 of the present modification example is configured as a five-layer structure of the sticking prevention layer 26, the adhesive layer 27, the base material layer 11, the adhesive layer 21, and the coating layer 12. The adhesive layer 27 is a second intermediate layer. The adhesive layer 27 may contain the same antistatic agent as in the coating layer 12 of the above-described embodiment. The adhesive layer 27 may be formed by adding an antistatic agent to a primer layer or easy adhesive layer that makes the base material layer 11 and the sticking prevention layer 26 adhere to each other.

It should be noted that in the lower light diffusion sheet 3 (see Fig. 1) of the above-described embodiment, the coating layer 18 and the sticking prevention layer 19 may be substantially free of antistatic agents, and an adhesive layer containing an antistatic agent may be provided between the base material layer 17 and the coating layer 18 and between the base material layer 17 and the sticking prevention layer 19 as in the present modification example.

### <Modification Example 6 of Upper Light Diffusion Sheet>

A difference of the upper light diffusion sheet 5 of the present modification example from the upper light diffusion sheet 5 of the above-described embodiment shown in Fig. 2 is that an adhesive layer 22 substantially free of antistatic agents is provided between the base material layer 11 and the coating layer 12 as shown in Fig. 9. That is, the upper light diffusion sheet 5 of the present modification example is configured as a three-layer structure of the base material layer 11, the adhesive layer 22, and the coating layer 12. The adhesive layer 22 is an intermediate layer.

It should be noted that in the lower light diffusion sheet 3 (see Fig. 1) of the above-described embodiment, the coating layer 18 may contain an antistatic agent, and an adhesive layer substantially free of antistatic agents may be provided between the base material layer 17 and the coating layer 18 as in the present modification example.

### <Modification Example 7 of Upper Light Diffusion Sheet>

Differences of the upper light diffusion sheet 5 of the present modification example from the upper light diffusion sheet 5 of the above-described embodiment shown in Fig. 2 are that an adhesive layer 51 containing an antistatic agent is provided between the base material layer 11 and the coating layer 12 as shown in Fig. 10, and the content of the antistatic agent in the coating layer 12 is lower than the content of the antistatic agent in the adhesive layer 51. That is, the upper light diffusion sheet 5 of the present modification example is configured as a three-layer structure of the base material layer 11, the adhesive layer 51, and the coating layer 12. The adhesive layer 51 is a first intermediate layer. The adhesive layer 51 may contain the same antistatic agent as that in the coating layer 12 of the above-described embodiment. The adhesive layer 51 may be formed by adding an antistatic agent to a primer layer or easy adhesive layer that makes the base material layer 11 and the coating layer 12 adhere to each other.

It should be noted that in the lower light diffusion sheet 3 (see Fig. 1) of the above-described embodiment, the coating layer 18 may contain an antistatic agent, an adhesive layer containing an antistatic agent may be provided between the base material layer 17 and the coating layer 18 as in the present modification example, and the content of the antistatic agent in the coating layer 18 may be lower than the content of the antistatic agent in the adhesive layer.

### <Modification Example 8 of Upper Light Diffusion Sheet>

A difference of the upper light diffusion sheet 5 of the present modification example from the upper light diffusion sheet 5 of the above-described modification example 7 shown in Fig. 10 is that the same sticking prevention layer 26 as in the modification example 4 is provided on the rear surface side of the base material layer 11 as shown in Fig. 11. However, in the present modification example, the sticking prevention layer 26 may be substantially free of antistatic agents. In addition, in the present modification example, an adhesive layer 52 containing an antistatic agent is provided between the base material layer 11 and the sticking prevention layer 26. That is, the upper light diffusion sheet 5 of the present modification example is configured as a five-layer structure of the sticking prevention layer 26, the adhesive layer 52, the base material layer 11, the adhesive layer 51, and the coating layer 12. The adhesive layer 52 is a second intermediate layer. The adhesive layer 52 may contain the same antistatic agent as in the coating layer 12 of the above-described embodiment. The adhesive layer 52 may be formed by adding an antistatic agent to a primer layer or easy adhesive layer that makes the base material layer 11 and the sticking prevention layer 26 adhere to each other.

It should be noted that in the lower light diffusion sheet 3 (see Fig. 1) of the above-described embodiment, the coating layer 18 may contain an antistatic agent, the sticking prevention layer 19 may be substantially free of antistatic agents, and an adhesive layer containing an antistatic agent may be provided between the base material layer 17 and the coating layer 18 and between the base material layer 17 and the sticking prevention layer 19 as in the present modification example.

### <Modification Example 9 of Upper Light Diffusion Sheet>

Differences of the upper light diffusion sheet 5 of the present modification example from the upper light diffusion sheet 5 of the above-described modification example 8 shown in Fig. 11 are that a sticking prevention layer 28 containing an antistatic agent is provided in place of the sticking prevention layer 26 substantially free of antistatic agents as shown in Fig. 12, and the content of the antistatic agent in the sticking prevention layer 28 is lower than the content of the antistatic agent in the adhesive layer 52. That is, the upper light diffusion sheet 5 of the present modification example is configured as a five-layer structure of the sticking prevention layer 28, the adhesive layer 52, the base material layer 11, the adhesive layer 51, and the coating layer 12.

It should be noted that in the lower light diffusion sheet 3 (see Fig. 1) of the above-described embodiment, the coating layer 18 and the sticking prevention layer 19 may contain an antistatic agent, and an adhesive layer containing an antistatic agent may be provided between the base material layer 17 and the coating layer 18 and between the base material layer 17 and the sticking prevention layer 19 as in the present modification example.

### <Features of Embodiment and Modification Examples>

The upper light diffusion sheets 5 and 25 and the lower light diffusion sheet 3, which are optical sheets of the embodiment and the modification examples 4 and 6 (hereinafter referred to as a first optical sheet), are an optical sheet including the base material layer 11 or 17 and the coating layer 12 or 18 provided on the surface of the base material layer 11 or 17, in which the coating layers 12 and 18 contain an antistatic agent, and when the optical sheet is placed in an environment of 65°C and 95%RH for 48 hours, the area percentage of the contaminated region on the surface of the coating layer 12 or 18 is less than 20%. According to the first optical sheet, it is possible to suppress dirt on the sheet surface due to the antistatic agent with a simple configuration. In the first optical sheet, when the antistatic agent is an ionic liquid or a reactive emulsifier, it is possible to reduce the amount of foreign matter such as lumps or crystals derived from the antistatic agent generated. In the first optical sheet, an intermediate layer (for example, the adhesive layer 22) substantially free of antistatic agents may be provided between the base material layer 11 or 17 and the coating layer 12 or 18.

In addition, the upper light diffusion sheet 5 and the lower light diffusion sheet 3 which are optical sheets of the modification examples 1 to 3, 5, and 7 to 9 (hereinafter referred to as a second optical sheet) are optical sheets including the base material layer 11 or 17 and the coating layer 12 or 18 provided on the surface of the base material layer 11 or 17, in which: a first intermediate layer containing an antistatic agent is provided between the base material layer 11 or 17 and the coating layer 12 or 18, and the contents of the antistatic agents in the coating layers 12 and 18 are lower than the content of the antistatic agent in the first intermediate layer. According to the second optical sheet, it is possible to suppress dirt on the sheet surface due to the antistatic agent without narrowing the options such as the types of antistatic agents that can be used. In the second optical sheet, the coating layers 12 and 18 may be substantially free of antistatic agents. In addition, the first intermediate layer may be the adhesive layer 21 that makes the base material layer 11 or 17 and the coating layer 12 or 18 adhere to each other. In this case, a second intermediate layer (thin layer) 23 containing an antistatic agent may be provided between the first intermediate layer and the coating layer 12 or 18. Alternatively, in the second optical sheet, the adhesive layer 22 substantially free of antistatic agents may be provided between the base material layer 11 or 17 and the first intermediate layer. In the second optical sheet, when the half-life of a static charge voltage according to a method A of JIS L 1094 is 30 seconds or shorter, sufficient antistatic performance can be obtained. When the second optical sheet is placed in an environment of 65°C and 95%RH for 48 hours, in a case where the degree of the contact angle decreased on the surface of the coating layer 12 or 18 is 10 degrees or less, it is possible to suppress foreign matter such as lumps or crystals derived from the antistatic agent being precipitated on the surface of the coating layer 12 or 18. In the second optical sheet, the sticking prevention layer 26 or 19 may be further provided on the rear surface of the base material layer 11 or 17, the sticking prevention layers 26 and 19 are substantially free of antistatic agents, and a second intermediate layer (for example, the adhesive layer 27) containing an antistatic agent may be provided between the base material layer 11 or 17 and the sticking prevention layer 26 or 19. Alternatively, in the second optical sheet, the sticking prevention layer 28 or 19 may be further provided on the rear surface of the base material layer 11 or 17, the sticking prevention layers 28 and 19 may contain an antistatic agent, a second intermediate layer (for example, the adhesive layer 52) containing an antistatic agent may be provided between the base material layer 11 or 17 and the sticking prevention layer 28 or 19, and the contents of the antistatic agents in the sticking prevention layers 28 and 19 may be lower than the content of the antistatic agent in the second intermediate layer. It should be noted that when the second optical sheet is placed in an environment of 65°C and 95%RH for 48 hours, the area percentage of a contaminated region on the surface of the coating layer 12 or 18 may be less than 20%.

Since the backlight unit of the above-described embodiment (including the modification examples) includes the light source 2 and the first or second optical sheet, it is possible to suppress dirt on the surface of the optical sheet due to the antistatic agent, and it is thus possible to suppress a decrease in brightness. According to a liquid crystal display device including this backlight unit and a liquid crystal display panel, it is possible to suppress a decrease in brightness on a display screen. Similarly, according to an information apparatus including this liquid crystal display device, it is possible to suppress a decrease in brightness on a display screen.

### (Examples)

Hereinafter, the present disclosure will be described in further detail with Examples, but the present disclosure is not limited to these Examples.

### <Example 1>

An optical sheet (lower light diffusion sheet) of Example 1 was manufactured in the following manner. First, a primer layer composed of an acrylic resin and an acrylate-based resin thermoset material was provided on the surface of a base material layer having an average thickness of 38 µm and containing polyethylene terephthalate as a main component, and a polymer ion conductive antistatic agent was added to the primer layer. As the antistatic agent, SANNOL (registered trademark) TD-3130 (polyoxyethylene alkyl (C₁₃) ether sulfonic acid Na) manufactured by Lion Corporation was used. Next, the surface of the base material layer on which the primer layer had been provided was wet-coated with an acrylic resin to provide a coating layer having a thickness of 8 µm. To the coating layer, acrylic beads and styrenic beads having particle diameters of 1 to 15 µm were blended and added, and no antistatic agents were added. Next, a urethane acrylate-based resin was shaped and transferred to the rear surface of the base material layer to provide a sticking prevention layer having a thickness of 8 µm. To the sticking prevention layer, resin beads (light diffusing agent) were not added.

### <Example 2>

An optical sheet (lower light diffusion sheet) of Example 2 was manufactured in the following manner. First, a primer layer composed of an acrylic resin and an acrylate-based resin thermoset material was provided on the surface of a base material layer having an average thickness of 38 µm and containing polyethylene terephthalate as a main component, and a polymer ion conductive antistatic agent was added to the primer layer. As the antistatic agent, SANNOL (registered trademark) TD-3130 (polyoxyethylene alkyl (C₁₃) ether sulfonic acid Na) manufactured by Lion Corporation was used. Next, the surface of the base material layer on which the primer layer had been provided was wet-coated with an acrylic styrene-based resin to provide a coating layer having a thickness of 10 µm. To the coating layer, acrylic beads having particle diameters of 1 to 25 µm were added, and no antistatic agents were added. Next, a urethane acrylate-based resin was shaped and transferred to the rear surface of the base material layer to provide a sticking prevention layer having a thickness of 8 µm. To the sticking prevention layer, resin beads (light diffusing agent) were not added.

### <Example 3>

An optical sheet (lower light diffusion sheet) of Example 3 was manufactured in the following manner. First, a primer layer composed of an acrylic resin and an acrylate-based resin thermoset material was provided on the surface of a thick base material layer having an average thickness of 38 µm and containing polyethylene terephthalate as a main component, and a polymer ion conductive antistatic agent was added to the primer layer. As the antistatic agent, SANNOL (registered trademark) TD-3130 (polyoxyethylene alkyl (C₁₃) ether sulfonic acid Na) manufactured by Lion Corporation was used. Next, the surface of the base material layer on which the primer layer had been provided was wet-coated with an acrylic styrene-based resin to provide a coating layer having a thickness of 10 µm. To the coating layer, acrylic beads having particle diameters of 1 to 25 µm were added, and no antistatic agents were added. Next, the rear surface of the base material layer was wet-coated with a urethane acrylate-based resin to provide a sticking prevention layer having a thickness of 5 µm. Urethane-based beads having particle diameters of 1 to 25 µm were added to the sticking prevention layer, and no antistatic agents were added.

### <Example 4>

An optical sheet (upper light diffusion sheet) of Example 4 was manufactured in the following manner. First, a primer layer composed of an acrylic resin and an acrylate-based resin thermoset material was provided on the surface of a base material layer having an average thickness of 75 µm and containing polyethylene terephthalate as a main component, and a polymer ion conductive antistatic agent was added to the primer layer. As the antistatic agent, SANNOL (registered trademark) TD-3130 (polyoxyethylene alkyl (C₁₃) ether sulfonic acid Na) manufactured by Lion Corporation was used. Next, the surface of the base material layer on which the primer layer had been provided was wet-coated with a urethane acrylate-based resin to provide a coating layer having a thickness of 5 µm. To the coating layer, acrylic beads having particle diameters of 1 to 15 µm were added, and no antistatic agents were added. Next, the rear surface of the base material layer was wet-coated with a urethane acrylate-based resin to provide a sticking prevention layer having a thickness of 8 µm. To the sticking prevention layer, resin beads (light diffusing agent) were not added.

### <Reference Example>

A difference of a method for manufacturing an optical sheet (lower light diffusion sheet) as a reference example from that in Example 1 is that no antistatic agents are added to the primer layer. That is, the optical sheet of the reference example is free of antistatic agents.

### <Comparative Example 1>

Differences of a method for manufacturing an optical sheet (lower light diffusion sheet) as Comparative Example 1 from that in Example 1 are that no antistatic agents were added to the primer layer, and a low-molecular-weight surfactant that served as an antistatic agent was added to the coating layer. As the antistatic agent, SANNOL (registered trademark) EH-1145M (alkyl (C₈) ether sulfonic acid MEA salt) manufactured by Lion Corporation was used. The amount of the antistatic agent added was 1.5 parts by mass with respect to 100 parts by mass of the resin configuring the coating layer.

### <Comparative Example 2>

Differences of a method for manufacturing an optical sheet (lower light diffusion sheet) as Comparative Example 2 from that in Example 2 are that no antistatic agents were added to the primer layer, and a low-molecular-weight surfactant that served as an antistatic agent was added to the coating layer. As the antistatic agent, SANNOL (registered trademark) EH-1145M (alkyl (C₈) ether sulfonic acid MEA salt) manufactured by Lion Corporation was used. The amount of the antistatic agent added was 1.2 parts by mass with respect to 100 parts by mass of the resin configuring the coating layer.

### <Example 5>

Differences of a method for manufacturing an optical sheet (lower light diffusion sheet) as Example 5 from that in Example 1 are that no antistatic agents were added to the primer layer, and no antistatic agents were added to the coating layer. As the antistatic agent, SANNOL (registered trademark) TD-3130 (polyoxyethylene alkyl (C₁₃) ether sulfonic acid Na) manufactured by Lion Corporation was used as in Example 1. The amount of the antistatic agent added was 1.5 parts by mass with respect to 100 parts by mass of the resin configuring the coating layer.

### <Example 6>

Differences of a method for manufacturing an optical sheet (lower light diffusion sheet) as Example 6 from that in Example 1 are that no antistatic agents were added to the primer layer, but an antistatic agent was added to the coating layer. As the antistatic agent, SANNOL (registered trademark) TD-3130 (polyoxyethylene alkyl (C₁₃) ether sulfonic acid Na) manufactured by Lion Corporation was used as in Example 1. The amount of the antistatic agent added was 3 parts by mass with respect to 100 parts by mass of the resin configuring the coating layer.

### <Example 7>

Differences of a method for manufacturing an optical sheet (lower light diffusion sheet) as Example 7 from that in Example 1 are that no antistatic agents were added to the primer layer, but an antistatic agent was added to the coating layer. As the antistatic agent, SANNOL (registered trademark) TD-3130 (polyoxyethylene alkyl (C₁₃) ether sulfonic acid Na) manufactured by Lion Corporation was used as in Example 1. The amount of the antistatic agent added was 5 parts by mass with respect to 100 parts by mass of the resin configuring the coating layer.

### <Assessment of Examples>

The results of the measurements of the electrical resistivities and surface roughness Ra of the sheet surfaces, static charge voltage tests, ash (ash adhesion) tests, the measurements of the contact angles of the sheet surfaces, and observations of the generation of dirt on the sheet surfaces performed on the optical sheets of Examples 1 to 4, Reference Example 1, and Comparative Examples 1 and 2 are shown in Table 1. It should be noted that the results shown in Table 1 are average values for which the number of samples is five.

**[Table 1]**

| | Electrical resistivity [Ω/sq] | Surface roughness Ra [nm] | Static charge voltage test | | | Ash test ash adhesion | Contact angle of water | | | | | Generation of dirt |
|---|---|---|---|---|---|---|---|---|---|---|---|---|
| | | | Static charge voltage immediately after [V] | Static charge voltage after 60 seconds [V] | Time taken for static charge voltage to be attenuate by half [sec] | | Untreated | 65°C and 95%RH | | 85°C and 85%RH | | |
| | | | | | | | | After treatment for 48 hours | | After treatment for 48 hours | | |
| | | | | | | | Measurement value [degrees] | Measurement value [degrees] | Amount changed [degrees] | Measurement value [degrees] | Amount changed [degrees] | |
| Example 1 | 6.2E+12 | 271 | 203 | 49 | 18 | No | 111 | 111 | 0 | 110 | -1 | O |
| Example 2 | 4.5E+12 | 771 | 200 | 45 | 16 | No | 94 | 93 | -1 | 91 | -3 | O |
| Example 3 | 4.9E+12 | 805 | 256 | 56 | 20 | No | 93 | 93 | 0 | 90 | -3 | O |
| Example 4 | 4.9E+12 | 768 | 18 | 9 | 25 | No | 84 | 81 | -3 | 80 | -4 | O |
| Reference Example | >9.9E+15 | 281 | 2546 | 2387 | ∞ | Yes | 114 | 113 | -1 | 112 | -2 | O |
| Comparative Example 1 | 6.6E+11 | 288 | 21 | 0 | 2 | No | 28 | 7 | -21 | 6 | -21 | X |
| Comparative Example 2 | 2.1E+11 | 899 | 560 | 103 | 8 | No | 59 | 32 | -27 | 36 | -24 | X |

The specific contents of each of the measurements, tests, and the like are as follows. The measurement of the electrical resistivity was in accordance with JIS K 6911, a voltage of 500 V was applied to a 10-cm square region of the measurement sample for 25 seconds using an electrode for a flat plate sample SME-8310 manufactured by Hioki E.E. Corporation, the resistance value was then measured, and the electrical resistivity was calculated. The measurement of the surface roughness Ra was in accordance with JIS B0601-1994, a measuring probe was brought into contact with the surface of the measurement sample in length of 40 mm using a surface roughness measuring apparatus SURFTEST SJ-210 manufactured by Mitutoyo Corporation, and the surface roughness was measured. The static charge voltage test was in accordance with a method B (rotary static testing method) of JIS L 1094 and a method A (half-life measurement method) of JIS L 1094, using a rotary static tester RST-300A manufactured by Daiei Kagaku Seiki Mfg. Co., Ltd., (1) the maximum static charge voltage value was measured when the measurement sample was rubbed with friction cloth in accordance with JIS L 0803 #3 for 60 seconds while a drum to which the measurement sample was attached was rotated (at 400 rpm), (2) the static charge voltage value was measured after 60 seconds from the stopping of the rubbing, and (3) the number of seconds required to reduce the static charge voltage value by half was measured from the maximum static charge voltage value. In the ash test, a treatment of placing the measurement sample on cloth in accordance with JIS L 0803 #3 and rubbing the measurement sample for five seconds was repeated around 10 times, tobacco ash prepared in advance was then brought as close to the rubbed surface of the measurement sample as a distance of 1 cm in a constant temperature and humidity room of 23°C and 50%RH, and whether the ash adhered to the measurement sample was examined. In the contact angle measurement, for each of the measurement samples before an environmental test (untreated), after an environmental test "at 65°C and 95%RH for 48 hours," and after an environmental test "at 85°C and 85%RH for 48 hours," 1 µg of water droplet was dropped onto the sheet surface, and the angle (contact angle) of the water droplet after one second was measured using an automatic contact angle meter DMo-601 manufactured by Kyowa Interface Science Co., Ltd. In the observation of the generation of dirt on the sheet surface, three optical sheets of the measurement samples were stacked together, an environmental test "at 65°C and 95%RH for 48 hours" was performed, a 1.5 mm² region in the central portion of the middle sheet out of the three stacked sheets was then observed at a magnification of 2000 times with a microscope, a case where the rate of an area free of adhering substances (contaminants) was 80% or more of the entire observed area was regarded as O, and a case where the rate was less than 80 was regarded as X. It should be noted that the middle sheet out of the three stacked sheets was observed, which prevented foreign matter not derived from the antistatic agent, which was generated due to direct exposure to the environment, from being observed.

As shown in Table 1, in Examples 1 to 4 in which no antistatic agents were added to the coating layer, compared to Comparative Examples 1 and 2 in which the antistatic agent was added to the coating layer, the electrical resistivities of the sheet surfaces were high, but the half-life of a static charge voltage was 30 seconds or shorter, even in the ash tests, there was almost no ash adhesion, and there was no problem with the antistatic performance. On the other hand, in Examples 1 to 4, dirt on the sheet surfaces due to the antistatic agent were sufficiently suppressed; however, in Comparative Examples 1 and 2, it was not possible to sufficiently suppress dirt on the sheet surfaces due to the antistatic agent. It should be noted that the results of the contact angle tests show that in Examples 1 to 4, the changes (decreases) in the contact angle before and after the environmental test were suppressed to 10 degrees or less; however, in Comparative Examples 1 and 2, the changes (decreases) in the contact angle before and after the environmental test exceeded 20 degrees.

In addition, in Examples 5 to 7 in which the antistatic agent was added to the coating layer, antistatic performances similar to those in Comparative Examples 1 and 2 could be obtained, and furthermore, as a result of observing the generation of dirt on the sheet surfaces as described above, dirt on the sheet surfaces due to the antistatic agent was sufficiently suppressed as in Examples 1 to 4. That is, when the optical sheets of Examples 5 to 7 were placed in an environment of 65°C and 95%RH for 48 hours, the area percentages of the contaminated regions on the surfaces of the coating layers were less than 20%.

### (Additional Examples)

Hereinafter, the present disclosure will be described in more detail with Examples 8 to 12.

### <Example 8>

An optical sheet (lower light diffusion sheet) of Example 8 was manufactured in the following manner. First, a primer layer composed of an acrylic resin and an acrylate-based resin thermoset material was provided on the surface of a base material layer having an average thickness of 38 µm and containing polyethylene terephthalate as a main component, and a surfactant-type antistatic agent was added to the primer layer. As the antistatic agent, SANNOL (registered trademark) EH-1145M (alkyl (C₈) ether sulfonic acid MEA salt) manufactured by Lion Corporation was used. The amount of the antistatic agent added was 1.2 parts by mass with respect to 100 parts by mass of the resin configuring the primer layer. Next, the primer layer provided on the surface of the base material layer was wet-coated with an acrylic styrene-based resin to provide a coating layer having a thickness of 10 µm. To the coating layer, acrylic beads having particle diameters of 1 to 25 µm were added, and a polymer ion conductive antistatic agent was added. As the antistatic agent, SANNOL (registered trademark) TD-3130 (polyoxyethylene alkyl (C₁₃) ether sulfonic acid Na) manufactured by Lion Corporation was used. The amount of the antistatic agent added was 0.5 parts by mass with respect to 100 parts by mass of the resin configuring the coating layer.

### <Example 9>

An optical sheet (lower light diffusion sheet) of Example 9 was manufactured in the following manner. First, a primer layer composed of an acrylic resin and an acrylate-based resin thermoset material was provided on the surface of a base material layer having an average thickness of 38 µm and containing polyethylene terephthalate as a main component, and a polymer ion conductive antistatic agent was added to the primer layer. As the antistatic agent, SANNOL (registered trademark) TD-3130 (polyoxyethylene alkyl (C₁₃) ether sulfonic acid Na) manufactured by Lion Corporation was used. The amount of the antistatic agent added was 1.5 parts by mass with respect to 100 parts by mass of the resin configuring the primer layer. Next, the primer layer provided on the surface of the base material layer was wet-coated with an acrylic styrene-based resin to provide a coating layer having a thickness of 10 µm. To the coating layer, acrylic beads having particle diameters of 1 to 25 µm were added, and a surfactant-type antistatic agent was added. As the antistatic agent, SANNOL (registered trademark) EH-1145M (alkyl (C₈) ether sulfonic acid MEA salt) manufactured by Lion Corporation was used. The amount of the antistatic agent added was 0.5 parts by mass with respect to 100 parts by mass of the resin configuring the coating layer.

### <Example 10>

An optical sheet (lower light diffusion sheet) of Example 10 was manufactured in the following manner. First, a first primer layer composed of an acrylic resin and an acrylate-based resin thermoset material was provided on the surface of a base material layer having an average thickness of 50 µm and containing polyethylene terephthalate as a main component, and a surfactant-type antistatic agent was added to the first primer layer. As the antistatic agent, SANNOL (registered trademark) EH-1145M (alkyl (C₈) ether sulfonic acid MEA salt) manufactured by Lion Corporation was used. The amount of the antistatic agent added was 1.2 parts by mass with respect to 100 parts by mass of the resin configuring the first primer layer. Next, the first primer layer provided on the surface of the base material layer was wet-coated with an acrylic styrene-based resin to provide a coating layer having a thickness of 10 µm. To the coating layer, acrylic beads having particle diameters of 1 to 25 µm were added, and no antistatic agents were added.

On the rear surface of the base material layer, a second primer layer composed of an acrylic resin and an acrylate-based resin thermoset material was provided, and a surfactant-type antistatic agent was added to the second primer layer. As the antistatic agent, SANNOL (registered trademark) EH-1145M (alkyl (C₈) ether sulfonic acid MEA salt) manufactured by Lion Corporation was used. The amount of the antistatic agent added was 1.2 parts by mass with respect to 100 parts by mass of the resin configuring the second primer layer. Next, a urethane acrylate-based resin was shaped and transferred onto the second primer layer provided on the rear surface of the base material layer to provide a sticking prevention layer having a thickness of 8 µm. To the sticking prevention layer, neither resin beads (light diffusing agent) nor antistatic agents were added.

### <Example 11>

An optical sheet (lower light diffusion sheet) of Example 11 was manufactured in the following manner. First, a first primer layer composed of an acrylic resin and an acrylate-based resin thermoset material was provided on the surface of a base material layer having an average thickness of 50 µm and containing polyethylene terephthalate as a main component, and a polymer ion conductive antistatic agent was added to the first primer layer. As the antistatic agent, SANNOL (registered trademark) TD-3130 (polyoxyethylene alkyl (C₁₃) ether sulfonic acid Na) manufactured by Lion Corporation was used. The amount of the antistatic agent added was 1.5 parts by mass with respect to 100 parts by mass of the resin configuring the first primer layer. Next, the first primer layer provided on the surface of the base material layer was wet-coated with an acrylic styrene-based resin to provide a coating layer having a thickness of 10 µm. To the coating layer, acrylic beads having particle diameters of 1 to 25 µm were added, and a surfactant-type antistatic agent was added. As the antistatic agent, SANNOL (registered trademark) EH-1145M (alkyl (C₈) ether sulfonic acid MEA salt) manufactured by Lion Corporation was used. The amount of the antistatic agent added was 0.5 parts by mass with respect to 100 parts by mass of the resin configuring the coating layer.

On the rear surface of the base material layer, a second primer layer composed of an acrylic resin and an acrylate-based resin thermoset material was provided, and a polymer ion conductive antistatic agent was added to the second primer layer. As the antistatic agent, SANNOL (registered trademark) TD-3130 (polyoxyethylene alkyl (C₁₃) ether sulfonic acid Na) manufactured by Lion Corporation was used. The amount of the antistatic agent added was 1.5 parts by mass with respect to 100 parts by mass of the resin configuring the second primer layer. Next, a urethane acrylate-based resin was shaped and transferred onto the second primer layer provided on the rear surface of the base material layer to provide a sticking prevention layer having a thickness of 8 µm. To the sticking prevention layer, neither resin beads (light diffusing agent) nor antistatic agents were added.

### <Example 12>

An optical sheet (lower light diffusion sheet) of Example 12 was manufactured in the following manner. First, a first primer layer composed of an acrylic resin and an acrylate-based resin thermoset material was provided on the surface of a base material layer having an average thickness of 50 µm and containing polyethylene terephthalate as a main component, and a surfactant-type antistatic agent was added to the first primer layer. As the antistatic agent, SANNOL (registered trademark) EH-1145M (alkyl (C₈) ether sulfonic acid MEA salt) manufactured by Lion Corporation was used. The amount of the antistatic agent added was 1.2 parts by mass with respect to 100 parts by mass of the resin configuring the first primer layer. Next, the first primer layer provided on the surface of the base material layer was wet-coated with an acrylic styrene-based resin to provide a coating layer having a thickness of 10 µm. To the coating layer, acrylic beads having particle diameters of 1 to 25 µm were added, and a surfactant-type antistatic agent was added. As the antistatic agent, SANNOL (registered trademark) EH-1145M (alkyl (C₈) ether sulfonic acid MEA salt) manufactured by Lion Corporation was used. The amount of the antistatic agent added was 0.5 parts by mass with respect to 100 parts by mass of the resin configuring the coating layer.

On the rear surface of the base material layer, a second primer layer composed of an acrylic resin and an acrylate-based resin thermoset material was provided, and a polymer ion conductive antistatic agent was added to the second primer layer. As the antistatic agent, SANNOL (registered trademark) TD-3130 (polyoxyethylene alkyl (C₁₃) ether sulfonic acid Na) manufactured by Lion Corporation was used. The amount of the antistatic agent added was 1.5 parts by mass with respect to 100 parts by mass of the resin configuring the second primer layer. Next, a urethane acrylate-based resin was shaped and transferred onto the second primer layer provided on the rear surface of the base material layer to provide a sticking prevention layer having a thickness of 8 um. To the sticking prevention layer, a surfactant-type antistatic agent was added. As the antistatic agent, SANNOL (registered trademark) EH-1145M (alkyl (C₈) ether sulfonic acid MEA salt) manufactured by Lion Corporation was used. The amount of the antistatic agent added was 0.5 parts by mass with respect to 100 parts by mass of the resin configuring the sticking prevention layer. To the sticking prevention layer, resin beads (light diffusing agent) were not added.

### <Assessment of Additional Examples>

The results of the measurements of the electrical resistivities on the front surfaces and rear surfaces of the sheets, static charge voltage tests, ash (ash adhesion) tests, and observations of the generation of dirt on the sheet surfaces performed on the optical sheets of Examples 8 to 12 in the same manner as in Examples 1 to 4 are shown in Table 2. It should be noted that the results shown in Table 2 are average values for which the number of samples is five.

**[Table 2]**

| | Electrical resistivity [Ω/sq] (front surface) | Electrical resistivity [Ω/sq] (rear surface) | Static charge voltage test | | | Ash test ash adhesion | Generation of dirt |
|---|---|---|---|---|---|---|---|
| | | | Static charge voltage immediately after [V] | Static charge voltage after 60 seconds [V] | Time taken for static charge voltage to be attenuate by half [sec] | | |
| Example 8 | 1.1E+12 | 5.5E+11 | 10 | 2 | 5 | No | O |
| Example 9 | 1.1E+11 | 6.2E+11 | 9 | 0 | 2 | No | O |
| Example 10 | 4.1E+11 | 6.8E+10 | 9 | 0 | 1 | No | O |
| Example 11 | 7.2E+11 | 6.6E+09 | 16 | 0 | 1 | No | O |
| Example 12 | 4.0E+11 | 6.1E+08 | 9 | 0 | 1 | No | O |

As shown in Table 2, in Examples 8 to 12, the electrical resistivities of the sheet surfaces were low compared with those of Examples 1 to 4, and the electrical resistivities of the sheet rear surfaces were lower than the electrical resistivities of the sheet surfaces. In addition, in Examples 8 to 12, the half-life of the static charge voltages were 10 seconds or shorter, there was almost no ash adhesion in the ash tests, and there was no problem with the antistatic performance. Furthermore, in Examples 8 to 12, dirt on the sheet surfaces due to the antistatic agents was sufficiently suppressed.

### <Laminated Charge Assessments>

Meanwhile, in the manufacturing process of the optical sheets, there is a case where a lot of the optical sheets cut to sizes in which the optical sheets can be incorporated into backlight units are transported in a state of being stacked. At this time, when the stacked optical sheets are charged, it becomes difficult to stack the optical sheets with the edges thereof aligned. Therefore, the inventors of the present application performed laminated charge assessments, which will be described below, on the optical sheets of Examples 1 to 12, Reference Example 1, and Comparative Examples 1 and 2.

First, three optical sheets cut out to A4 size, which were assessment targets, B4-size flannel cloth attached to a flat plate to prevent the generation of wrinkles, and a blast type destaticizer were prepared. Next, one A4-size optical sheet was placed on the flannel cloth attached to the plate, a weight having a mass of 500 g was placed on the optical sheet, and the flannel cloth and the optical sheet were rubbed with each other 10 times in a manner that circles having a radius of around 100 mm were drawn in a state where the flannel cloth and the optical sheet were stacked in parallel. A total of three optical sheets were rubbed in order in the above-described manner, the three rubbed optical sheets were stacked together, the blast type destaticizer was started, and the end portion of the uppermost optical sheet out of the three stacked optical sheets was grabbed and vertically lifted to a height of 500 mm for around five seconds at a position around 500 mm apart from the front surface of the destaticizer. In addition, a case where other ungrabbed optical sheets were fallen apart from the optical sheet (that is, the optical sheets had not adhered to one another) at the same time as the uppermost optical sheet was lifted was determined as o (best). In addition, a case where when the uppermost optical sheet was lifted, two or more optical sheets including the above-described optical sheet were lifted in an adhering state, but the ungrabbed optical sheets fell apart within 10 seconds (a case where the adhesion between the optical sheets was eliminated by blasts of the destaticizer) was determined as Δ (acceptable). In addition, a case where when the uppermost optical sheet was lifted, two or more optical sheets including the above-described optical sheet were lifted in an adhering state, and the adhesion state of two or more optical sheets was maintained even after 10 seconds was determined as X (unacceptable).

The results of the laminated charge assessments described above were Δ in Examples 1 to 4, X in the reference example, and o in Comparative Examples 1 and 2 and Examples 5 to 12.

### (Other Embodiments)

Hereinafter, embodiments (including modification examples and examples, which will also be true below) relating to the present disclosure will be described, but the present disclosure is not solely limited to the embodiments described above and can be modified various manners within the scope of the disclosure. That is, the above description of the embodiment is merely illustrative in nature and is not intended to limit the present disclosure and applications or uses thereof.

The optical sheet of the above-described embodiment may be a two-layer structure of a base material layer and a coating layer or a three-layer structure of a base material layer, a coating layer, and a sticking prevention layer. In addition, there may be other layers, such as an intermediate layer, between the base material layer and the coating layer or between the base material layer and the sticking prevention layer.

In the optical sheet of the above-described embodiment, while the antistatic agent is added to the coating layer or to the intermediate layer between the base material layer and the coating layer, but the antistatic agent may be added to the base material layer or an antistatic agent-containing layer may be provided between two base material layers.

The backlight unit according to the present disclosure can be implemented in various modified or improved aspects aside from the above-described embodiment. For example, the backlight unit may include optical sheets other than the upper light diffusion sheet, the prism sheet, and the lower light diffusion sheet on the front surface side of the light guide sheet. In addition, the backlight unit is not limited to the edge lighttype backlight unit, but may be, for example, a direct-type backlight unit having a diffusion plate and a light source arranged on the rear surface side of a lower light diffusion sheet. Furthermore, the specific configurations of the prism sheet, the light diffusion sheet, the light guide sheet, the light source, and the reflective sheet in the backlight unit are not particularly limited, and sheets with various configurations can be employed. For example, the light diffusion sheet is not limited to a bead-coated light diffusion sheet and may be a light diffusion sheet having a shape like a pyramid sheet. In optical sheets with these various configurations, an antistatic agent may be incorporated thereinto as in the optical sheet according to the above-described embodiment.

The backlight unit according to the present disclosure can be used in a wide range of applications such as relatively large display devices such as personal computers or liquid crystal televisions, mobile phone terminals such as smartphones, and personal digital assistants such as tablet terminals.

In the above-described embodiment, in the light diffusion sheet including the base material layer and the coating layer formed on the base material layer, an uneven shape was formed on the surface of the light diffusion sheet by dispersing the resin beads in the resin matrix of the coating layer, which served as the light diffusion layer. However, instead, the uneven shape may be formed on the surface of the light diffusion sheet using, for example, a mold to which an uneven shape formed by dispersing the resin beads in the resin matrix has been transferred or using a laser printer in which the uneven shape has been memorized.

### Reference Signs List

- 1: Light guide sheet
- 2: Light source
- 3: Lower light diffusion sheet
- 4: Prism sheet
- 5: Upper light diffusion sheet
- 6: Reflective sheet
- 11: Base material layer
- 12: Coating layer
- 13: Resin matrix
- 14: Resin bead
- 15: Base material layer
- 16: Projecting prism portion
- 17: Base material layer
- 18: Coating layer
- 19: Sticking prevention layer
- 21: Adhesive layer
- 22: Adhesive layer
- 23: Thin layer
- 25: Upper light diffusion sheet
- 26: Sticking prevention layer
- 27: Adhesive layer
- 28: Sticking prevention layer
- 31: Liquid crystal panel
- 32: Front surface side polarizing plate
- 33: Rear surface side polarizing plate
- 34: Liquid crystal cell
- 51: Adhesive layer
- 52: Adhesive layer

## Claims

1. An optical sheet, comprising:
a base material layer; and
a coating layer provided to a first surface of the base material layer,
wherein the coating layer contains an antistatic agent, and
an area percentage of a contaminated region on a surface of the coating layer is less than 20% when the optical sheet is placed in an environment of 65°C and 95%RH for 48 hours.

2. The optical sheet according to claim 1, wherein an intermediate layer substantially free of antistatic agents is provided between the base material layer and the coating layer.

3. An optical sheet, comprising:
a base material layer; and
a coating layer provided to a first surface of the base material layer,
wherein a first intermediate layer containing an antistatic agent is provided between the base material layer and the coating layer, and
a content of an antistatic agent in the coating layer is lower than a content of the antistatic agent in the first intermediate layer.

4. The optical sheet according to claim 3, wherein the coating layer is substantially free of antistatic agents.

5. The optical sheet according to claim 3, wherein the first intermediate layer is an adhesive layer that makes the base material layer and the coating layer adhere to each other.

6. The optical sheet according to claim 5, wherein a second intermediate layer containing an antistatic agent is provided between the first intermediate layer and the coating layer.

7. The optical sheet according to claim 3, wherein an adhesive layer substantially free of antistatic agents is provided between the base material layer and the first intermediate layer.

8. The optical sheet according to claim 3, wherein a half-life of a static charge voltage according to a method A of JIS L 1094 is 30 seconds or shorter.

9. The optical sheet according to claim 3, wherein an amount of a contact angle decreased on a surface of the coating layer is 10 degrees or less when the optical sheet is placed in an environment of 65°C and 95%RH for 48 hours.

10. The optical sheet according to claim 3, further comprising:
a sticking prevention layer provided on a second surface of the base material layer,
wherein the sticking prevention layer is substantially free of antistatic agents, and
a second intermediate layer containing an antistatic agent is provided between the base material layer and the sticking prevention layer.

11. The optical sheet according to claim 3, further comprising:
a sticking prevention layer provided on a second surface of the base material layer,
wherein the sticking prevention layer contains an antistatic agent,
a second intermediate layer containing an antistatic agent is provided between the base material layer and the sticking prevention layer, and
a content of the antistatic agent in the sticking prevention layer is lower than a content of the antistatic agent in the second intermediate layer.

12. The optical sheet according to claim 3, wherein an area percentage of a contaminated region on a surface of the coating layer is less than 20% when the optical sheet is placed in an environment of 65°C and 95%RH for 48 hours.

13. A backlight unit, comprising:
a light source; and
the optical sheet according to any one of claims 1 to 12.

14. A liquid crystal display device, comprising:
the backlight unit according to claim 13; and
a liquid crystal display panel.

15. An information apparatus, comprising:
the liquid crystal display device according to claim 14.
